# EUROPEAN PATENT APPLICATION

(11) **EP 2 375 572 A1**
(43) Date of publication of application: **12.10.2011**
(21) Application number: 10425098.0
(22) Date of filing: 30.03.2010
(51) Int. Cl.: H04B 1/38

(54) **A modular microwave system**

(71) Applicant: Alcatel-Lucent Italia S.p.A., 20124 Milano (IT)
(72) Inventor: Galbiati, Paolo, 20061 Carugate (MI) (IT)
(74) Representative: Colombo, Stefano Paolo

(57) **Abstract**

A modular microwave system, comprising a baseband subsystem, a modem subsystem and a radio frequency subsystem. The microwave system further comprises a first connection means adapted for providing a first plurality of electronic connection types and a second connection means adapted for providing a second plurality of electronic connection types. In use the first connection means is adapted for providing a specific connection type between the baseband subsystem and the modem subsystem and the second connection means is adapted for providing another specific connection type between the modem subsystem and the radio frequency subsystem.

## Description

The present invention relates to a modular microwave system and in particular an outdoor modular microwave system.

### BACKGROUND ART

In radio communications, and in particular in microwave communication systems, it may occur that the user is located inside a building whereas the transmission is made outside the building toward a remote destination. In such situations, the communication needs to be directed from an indoor unit to an outdoor unit, the latter being in charge of outputting the signals by means of radio transmission through an antenna. This type of radio station configuration is generally referred to as Split Mount configuration, as two separate units are typically needed. However, recently there is some trend toward designing systems which are monolithic, namely systems which use both functionalities of the indoor unit and that of the outdoor unit in one single equipment. In this regards, microwave transmission/reception systems are designed which only use an outside module that incorporates a complete indoor/outdoor functionality. Such systems are typically called full-outdoor systems.

### SUMMARY

In the foregoing reference is made to a full-outdoor (or outdoor) unit, which is a filed where embodiments of the invention may mostly find their applications. However, the invention is not to be construed as being only limited to full-outdoor (or outdoor) applications. Therefore the invention relates also to any other application using a system falling within the scope of the claimed invention.

Unlike split-mount microwave systems, full-outdoor microwave systems are monolithic hardware architectures in which all the main functional blocks (typically baseband, modem and RF section) are embedded in a single hardware enclosure suitable for outdoor installation.

Some advantages of using such full-outdoor microwave systems are the possibility to achieve less expensive installations (as compared to the split-mount systems) due to the fact that there are typically no components requiring indoor installation.

However, conventional full outdoor microwave systems suffer from certain drawbacks. One such drawback is that they typically require a considerable number of possible parts to be used in them in order to become operable and capable of covering all or at least a significant number of possible frequencies, modem options, interface types and interface numbers.

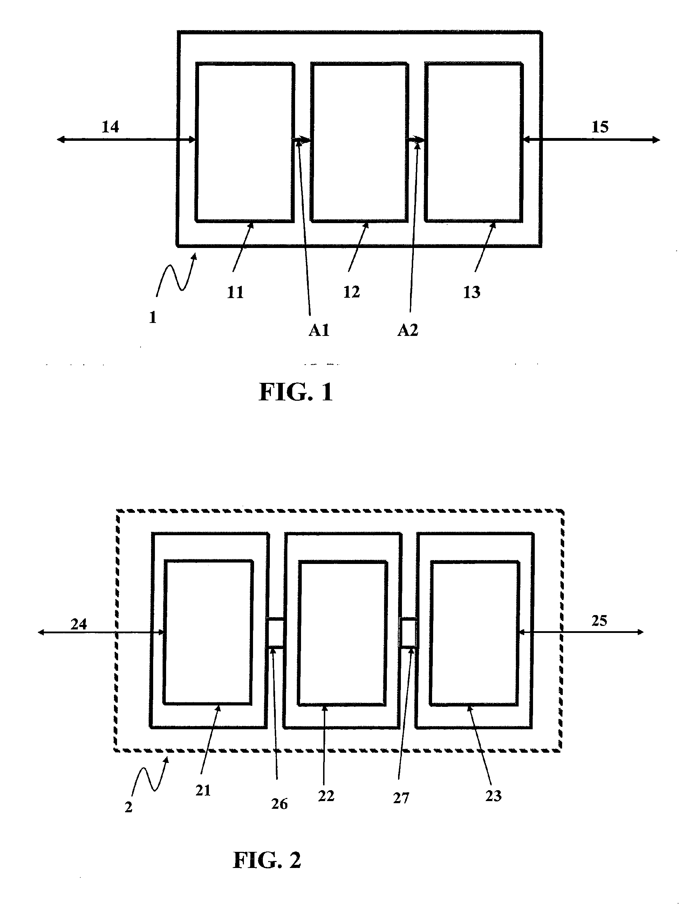

Figure 1 is an exemplary schematic representation of a conventional monolithic full outdoor radio transmission/reception unit 1 (hereinafter referred to as "outdoor unit"). For the sake of simplicity, only blocks of functionalities that are relevant for a better understanding of the present description are shown and described herein.

The outdoor unit 1, typically comprises a baseband subsystem 11, a modem subsystem 12 and a radio frequency (RF) subsystem 13.

The base band subsystem 11 is typically used for interfacing with the transmission circuitry which may be present in the system in order to receive signals from the user equipment (not shown) through an input represented in the figure by the arrow 14. The baseband subsystem 11 is used for adapting the signal coming from the user equipment to the RF transmission. In transmission direction, this function, for instance, multiplexes multiple users' signals with other information such as equipment alarms, in a single data stream to be transmitted over the microwave links. In the receive direction, the opposite function is performed. Furthermore this subsystem can support Quality of Service management and data processing. The output of the baseband subsystem 11 is connected, typically through a permanent connection shown in the figure by means of error A1, to an input of the modem subsystem 12. The modem subsystem 12 performs certain typical operations on the signals received such as for example modulating/demodulating the signal from/to the baseband system so as to generate an encoded signal to be transmitted/received by the subsequent RF subsystem. The output of the modem subsystem 12 is connected, typically through a permanent connection shown in the figure by means of error A2, to an input of the RF subsystem 13. The RF subsystem 13 performs certain typical operations on the signals received so as to out the signal in conditions suitable for radio transmission

The signal is then output from the RF subsystem through an output port as shown by means of arrow 15 typically toward an antenna for radio transmission. In this conventional system, the entire outdoor unit 1 is made is such a manner that each individual unit is only designed and manufactured for a specific application such that the unit is only and permanently appropriate for that specific application. One non-limiting examples of such as transmission of IP traffic through an Ethernet 10BaseT interface over a 4QAM 18GHz radio link. In one specific application, such as the ones mentioned, specific types of the baseband subsystem, the modem subsystem and the RF subsystem would be required so as to provide the required functionalities with the frequency ranges, modulation types and transmission rates of that particular application. However, baseband subsystems available in the market typically have a number of variants each appropriate for one or more specific applications. The same is true as regards modem subsystems and RF subsystems. Therefore, assuming that there exist X variants of the baseband subsystem, Y variants of the modem subsystem and Z variants of the RF subsystems, in order to cover all the possible applications that may be used in current radio transmission systems, one would need to manufacture X*Y*Z variants. This is undesirable because it would cause a significant manufacturing cost, in addition to design requirements for each of the subsystems which as such also would increase overall costs. Furthermore, in case it is envisaged to change the application which is running with a different application, the whole outdoor unit would need to be replaced, which is also undesirable.

Embodiments of the present invention feature a new solution which aims at overcoming at least some of the drawbacks of the conventional systems.

Some embodiments feature a modular microwave system, comprising a baseband subsystem, a modem subsystem and a radio frequency subsystem, wherein the microwave system further comprises a first connection means adapted for providing a first plurality of electronic connection types and a second connection means adapted for providing a second plurality of electronic connection types wherein the first connection means is adapted for providing a connection type from the first plurality of electronic connection types between the baseband subsystem and the modem subsystem and the second connection means is adapted for providing a connection type from the second plurality of connection types between the modem subsystem and the radio frequency subsystem.

These and further features and advantages of the present invention are described in more detail, for the purpose of illustration and not limitation, in the following description as well as in the claims with the aid of the accompanying drawings.

### BRIEF DESCRIPTION OF THE DRAWINGS

Figure 1, already described, is an exemplary schematic representation of a conventional full outdoor radio transmission/reception unit.
Figure 2 is an exemplary schematic representation of a full outdoor radio transmission/reception unit according to some embodiments.

### DETAILED DESCRIPTION

In figure 2, in similar fashion as in figure 1, for the sake of simplicity, only blocks of functionalities that are relevant for a better understanding of the present description are shown and described herein.

The outdoor unit 2 of figure 2, comprises a baseband subsystem 21, a modem subsystem 22 and a radio frequency (RF) subsystem 23. The outdoor unit 2 has been represented in the figure by means of a broken lines to represent the fact that the unit in itself is not necessarily needed, and that the outdoor unit 2 may in fact simply be the assembly of the subsystems it is comprised of.

The base band subsystem 21, the modem subsystem 22 and the RF subsystem of figure 2 perform similar functionalities as the corresponding subsystems described in relation to figure 1. Therefore, a detailed description of these subsystems is considered not necessary.

However, according to embodiments of the invention, a first connection means 26 is used for providing connection between an output of the baseband subsystem 21 and an input of the modem subsystem 22.

The first connection means 26 is configured so as to provide a first plurality of electronic connection types between the baseband subsystem 21 and the modem subsystem 22.

Furthermore, according to embodiments of the invention, a second connection means 27 is used for providing connection between an output of the modem subsystem 22 and an input of the RF subsystem 23.

The second connection means 27 is configured so as to provide a second plurality of electronic connection types between the modem subsystem 21 and the RF subsystem 23.

In the foregoing where the connection means are not identified as first or second connection means, the description is to be understood to refer to either one of said first or second connection means. Likewise, where the plurality of electronic connection types are not identified as first or second electronic connection types, the description is to be understood to refer to either one of said first or second electronic connection type.

Preferably, a specific electronic connection type is used for a specific application to be used in microwave radio transmission. Some non-limiting examples of such electronic connection types are:
- for the baseband subsystem: Ethernet, Fast Ethernet, Gigabit Ethernet ports Optical and/or Electrical, PDH interfaces (like E1, DS1, E3, DS3), SDH/SONET Interfaces (such as STM-1, STM-4, OC-3, OC-12), Data interfaces (like V.28, V.11, V.35, V.36). The mentioned interfaces can be single or multiple in any combination;
- for the modem subsystem: narrowband modem with channel spacing below 30MHz, wideband modem with channel spacing above 30 MHz, low density modulation modem with modulation scheme up to 16 QAM, high density modem with modulation scheme higher than 16 QAM, modem with no frequency reuse (without Cross-polar interference canceller - XPIC), modem with frequency reuse (with Cross-polar interference canceller - XPIC), single carrier & channel modem, multi channel & carrier modem.

Preferably the plurality of electronic connection types are provided using corresponding connection links between an input of a connection means and an output of the connection means.

Preferably each connection link is used for a specific electronic connection type. Alternatively a connection link may be used for more than one specific electronic connection type.

The connection links may be separate electronic paths. Alternatively a plurality of connection links may use a single electronic path.

The connection means preferably comprises specific mechanical structures for each of the connection links and specific plug shapes for input and output ports thereof. Said plug shapes are preferably in conformity with the mechanical shape of a plug to be used for a specific application as required by existing standards or as generally accepted and used throughout the industry and user communities. With the exemplary configuration as described above, the outdoor unit 2 of figure 2 may be assembled for each specific application by selecting a baseband subsystem 21 suitable for that specific application, a modem subsystem 22 suitable for the specific application and an RF subsystem suitable for the specific application. Then the output of the baseband subsystem 21 is connected to the input of the modem subsystem 22 using a first connection means 26, by plugging a corresponding input of the first connection means 26 to the output of the baseband subsystem 21, and by plugging a corresponding output of the first connection means 26 to the input of the modem subsystem 22.

Likewise, the output of the modem subsystem 22 is connected to the input of the RF subsystem 23 using a second connection means 27, by plugging a corresponding input of the second connection means 26 to the output of the modem subsystem 22, and plugging a corresponding output of the second connection means 27 to the input of the RF subsystem 23.

In this manner, the outdoor unit 2 may be easily assembled for any specific application Therefore, specific types of the baseband subsystem, the modem subsystem and the RF subsystem may be easily interconnected so as to provide the required functionalities with the frequency ranges, modulation types and transmission rates of that particular application.

Furthermore, in case it is envisaged to change the application which is running in order to run a different application, it is sufficient to simply unplug the subsystems from the connection means, replace the existing subsystems with those suitable for the new application and reassemble the whole outdoor unit by simply plugging the new subsystems together using the connection plugs of the connection means 26 and 27 that are appropriate for the new application.

It is to be noted that the full outdoor unit as described in the embodiments herein may be capable of operating in transmission mode as well as in reception mode or performing bi-directional operation, namely for transmission and reception by the same individual unit.

Therefore, assuming that there exist X variants of the baseband subsystem, Y variants of the modem subsystem and Z variants of the RF subsystems in the market, in order to cover all the possible applications that may be used in current radio transmission systems, one would only need to assemble X+Y+Z variants. This is a significant advantage as compared to the conventional systems which as described above, would require manufacturing X*Y*Z different outdoor units in order to be able to cover all the applications.

Furthermore, the need to design new modules, for example a specific modem subsystem, each time the application is changed is also eliminated.

In this manner a new microwave full outdoor unit is provided which allows for a significant reduction in manufacturing and design cost.

It is to be noted that the list of structures corresponding to the claimed means is not exhaustive and that one skilled in the art understands that equivalent structures can be substituted for the recited structure without departing from the scope of the invention. In some embodiments, the baseband and the modem subsystems may be integrated in one unit.

It should be appreciated by those skilled in the art that any block diagrams herein represent conceptual views of illustrative circuitry embodying the principles of the invention.

## Claims

1. A modular microwave system, comprising a baseband subsystem, a modem subsystem and a radio frequency subsystem, wherein the microwave system further comprises a first connection means adapted for providing a first plurality of electronic connection types and a second connection means adapted for providing a second plurality of electronic connection types wherein the first connection means is adapted for providing a connection type from the first plurality of electronic connection types between the baseband subsystem and the modem subsystem and the second connection means is adapted for providing a connection type from the second plurality of connection types between the modem subsystem and the radio frequency subsystem.

2. The system of claim 1 wherein the modular microwave system is an outdoor unit.

3. The system of any one of previous claims, wherein a specific electronic connection type is useable for a specific application to be used in microwave radio transmission.

4. The system of any one of previous claims wherein an electronic connection type is provided using at least one connection link between an input of a connection means and an output of the connection means.

5. The system of claim 4 wherein a connection link is useable for more than one specific electronic connection type.

6. The system of any one of previous claims 4 or 5 wherein one or a plurality of connection links comprise a single electronic path.

7. The system of any one of previous claims wherein a connection means comprises a mechanical structure and/or a plug shape for input and output
ports in conformity with a mechanical shape of a plug to be used for a specific application.

## Amended claims

### Amended claims in accordance with Rule 137(2) EPC.

**1.** A modular microwave system (2), comprising a baseband subsystem (21), a modem subsystem (22) and a radio frequency subsystem (23), wherein the microwave system (2) further comprises a first connection means (26) adapted for providing a first plurality of electronic connection types and a second connection means (27) adapted for providing a second plurality of electronic connection types, wherein the first connection means (26) is adapted for providing a connection type from the first plurality of electronic connection types between the baseband subsystem (21) and the modem subsystem (22) and the second connection means (27) is adapted for providing a connection type from the second plurality of connection types between the modem subsystem (22) and the radio frequency subsystem (23).

**2.** The system (2) of claim 1 wherein the modular microwave system (2) is an outdoor unit.

**3.** The system (2) of any one of previous claims, wherein a specific electronic connection type is useable for a specific application to be used in microwave radio transmission.

**4.** The system (2) of any one of previous claims wherein an electronic connection type is provided using at least one connection link between an input of a connection means and an output of the connection means.

**5.** The system (2) of claim 4 wherein a connection link is useable for more than one specific electronic connection type.

**6.** The system (2) of any one of previous claims 4 or 5 wherein one or a plurality of connection links comprise a single electronic path.

**7.** The system (2) of any one of previous claims wherein a connection means (26, 27) comprises a mechanical structure and/or a plug shape for input and output ports in conformity with a mechanical shape of a plug to be used for a specific application.
